Europäisches Patentamt

(19) European Patent Office    (11) Publication number: **0 189 657**

Office européen des brevets                        **B1**

(12)                  **EUROPEAN PATENT SPECIFICATION**

(45) Date of publication of the patent specification:      (51) Int. Cl.⁴: **C 12 C 9/00**
01.03.89

(21) Application number: **85309004.1**

(22) Date of filing: **11.12.85**

(54) **A brewing process.**

(30) Priority: **12.12.84 GB 8431289**
           **12.12.84 GB 8431290**

(43) Date of publication of application:
**06.08.86 Bulletin 86/32**

(45) Publication of the grant of the patent:
**01.03.89 Bulletin 89/9**

(84) Designated Contracting States:
**AT BE CH DE FR GB IT LI LU NL SE**

(56) References cited:
**CH-A- 474 571**
**DE-A- 3 126 714**
**DE-C- 120 940**
**DE-C- 178 973**
**DE-C- 274 777**
**US-A- 2 433 411**

**J. DE CLERCK: "Cours de brasserie", vol. 1, 2nd edition, pages 524-527, Université de Louvain, Institut Agronomique, Section de Brasserie, Heverlee-Louvain, BE.**

(73) Proprietor: **WHITBREAD & COMPANY PLC, Brewery Chiswell Street, London EC1Y 4SD (GB)**

(72) Inventor: **Maule, David Roger, 45 Kimbolton Road, Bedford MK40 2PG (GB)**

(74) Representative: **Rackham, Stephen Neil et al, GILL JENNINGS & EVERY 53-64 Chancery Lane, London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

In the brewing of beer the initial stages consist of crushing malted barley and then mashing it by mixing it with hot water so that enzymes from the malted barley act on starch in the malted barley to convert the starch into soluble sugars which dissolve in the water. The solution of the soluble sugars and other soluble compounds is then separated from spent malt by filtration with the spent malt itself usually forming a porous bed through which the solution is filtered. The resulting solution of sugars and other soluble compounds is known as a sweet wort and this sweet wort is then boiled with hops or preparations derived from hops such as hop powders and extracts to produce a hopped wort. The hopped wort is then fermented to produce beer.

The boiling of the wort performs a number of functions. Firstly unwanted volatile components of the wort are removed. These unwanted volatile components include sulphur-containing compounds which give the resulting beer a vegetable flavour if not removed. Secondly the wort contains materials such as proteins and polyphenols which coagulate on boiling to form a precipitate known as trub. This trub is then removed after the boiling step and before the fermentation step. By removing the proteins and polyphenols in this way the subsequent formation of hazes and precipitates in the fermented beer is reduced. Thirdly, when the wort is boiled with hops or hop powders, alpha acids from the hops are isomerised and dissolve in the wort to provide bitterness in the fermented beer. The boiling process also helps to transfer other flavouring components of the hops from the hops to the wort. Fourthly, the boiling step stabilises the wort by destroying enzymes and micro-organisms such as bacteria. Fifthly, and finally, boiling the wort helps to develop the colour and flavour of the resulting wort, for example by melanoidin reactions.

The step of wort boiling takes a significant time and is the most energy intensive step in the brewing process. The wort typically has to be heated from about 70°C at which the wort separation takes place, to boiling point, normally 100°C and then boiled at this temperature for at least 45 minutes to ensure adequate coagulation of the proteins and polyphenols and to achieve the required degree of evaporation to remove unwanted volatile materials. It is this boiling which consumes most of the energy used.

Various attempts have been made to reduce the energy required to boil wort and DE-A 3 126 714 discusses some of these and describes one such system in detail. This specification discusses systems in which wort is boiled under pressure at temperatures of 140°C for a short period of only three minutes. In the system described in detail wort is passed through a pressurised column in counter current with a stream of live steam or a mixture of steam and an inert gas, which continuously boils the wort. The specification explains that if a gas is used in addition to the steam it must be an inert gas such as nitrogen or carbon dioxide to prevent oxidation leading to unacceptable darkening of the wort. It is believed that such unacceptable darkening would be caused by the high operating temperatures of such a column.

The formation of the trub during boiling means that the boiled wort then has to be separated from the trub and this is usually carried out by introducing the boiled wort into a whirlpool tank, the hopped wort being passed tangentially into the tank so setting up a whirlpool and then being left to settle in the tank so that the solid material is deposited in a cone on the floor of the tank. After settling, the clarified wort is run out from an outlet towards the edge of the tank. This trub removal step typically takes over half an hour to perform. Frequently some trub is carried through the whirlpool tank into the fermenter and it is believed that this can give rise to sulphury flavours in the finished beer. Various attempts have been made to remove as much trub as possible before fermentation, for example, using centrifugation, filtration or air floatation methods.

Once the trub has been removed the clarified wort then has to be cooled to a temperature of around 6–20°C before fermentation begins. This step of cooling the wort before fermentation takes an appreciable time and adds a significant cost to the brewing process.

According to this invention the step of wort boiling in the brewing of beer is replaced by causing the wort to flow as a thin film or spray against a counter-current of air to remove the unwanted volatile components of the wort by evaporation, and the subsequent addition of hop bittering principles and flavour compounds in a soluble form.

The energy required for the evaporation is derived from the heat content of the wort itself, thus the evaporation results in a drop in temperature of the wort, of typically between 20°C and 30°C. This, in turn, provides a considerable saving in cooling medium and plant required to cool the wort before it is fermented.

The brewing process preferably includes a stabilisation step in which the wort is held at a high temperature for a period of time before being contacted with the air. This high temperature is preferably in a range from 80°C to the boiling point of the wort at atmospheric pressure and more preferably between 90°C and 95°C. An example of such a stabilisation step would be holding the wort at a temperature of about 95°C for ten minutes. At a lower temperature a longer period of time would be required. This stabilising step is primarily provided to destroy enzymes and microorganisms. In addition, having the wort at a high temperature at the start of the forced contact with air makes the evaporation more rapid and keeps the wort at reasonably high temperatures unfavourable to microbial contaminants throughout its contact with the air. During the contact with air it is preferred that steps are taken to ensure that the air is free from microbial contaminants.

Preferably evaporation of at least 3% of the wort takes place during the forced contact with air but as much as 15% of the wort may be evaporated depending upon the final beer required and the nature of the initial components. Typically an evaporation of 6% is carried out. The energy needed to be supplied to achieve this evaporation by contact with air in accordance with this invention is substantially less than that required for this much evaporation to be achieved by boiling.

Preferably the evaporation step is carried out as an «in-line» treatment as the wort is passed from a heating vessel in which it is stabilised to a fermentation vessel. In this case the wort may be passed directly through an «in-line» chiller after its evaporation to adjust the temperature of the wort to that required for the start of fermentation. Preferably the evaporation takes place in a trickle column with the wort trickling over the plates and falling through the column and air passing upwards through the column. Whilst it is much more convenient to use air it is possible to use other gases that are readily available in a brewery such as carbon dioxide if this is preferred.

The bitterness and other hop flavours that are normally introduced by boiling, are preferably added to the fermented beer as pre-isomerised hop extracts and as extracts of hops which are rich in the essential hop oil components to provide flavour. It may also be desirable to adjust the colour of the beer for example by the addition of caramel to the wort or beer or by inclusion of darker malts in the grist from which the wort is made.

Treatment of wort in accordance with this invention avoids the coagulation of proteins and polyphenols prior to fermentation thus avoiding the energy expense and cleaning costs associated with the rapid and heavy fouling of heating surfaces that are incurred in other methods of brewing. Furthermore the invention avoids the need for a separate process such as passage through a whirlpool tank, for the removal of coagulated material prior to fermentation. This gives benefits in avoiding the loss of wort entrained in the trub when it is removed, in reducing the amount of plant required for brewing and in avoiding problems of flavour, loss of beer by entrainment and reduction in the quality of yeast harvested after fermentation which may stem from passage of trub into the fermenter and the sedimentation of the trub with the yeast, thereby contaminating it. A further advantage of this invention is that it avoids the development of unwanted colour and unwanted flavours which may result from the prolonged contact of the wort with hot surfaces during a conventional boiling step.

The amount and complexity of brewing plant required to carry out the brewing process when it includes the present invention are substantially less than those required for other brewing processes. Provision of large energy and heat transfer surfaces to allow boiling is no longer required and plant for the re-use of, or recovery of, heat from steam evaporated from the wort is not needed to achieve economy in energy use. No coagulation of the proteins and polyphenols occurs before fermentation in accordance with the present invention and so there is no need for means to remove coagulated material. Further, the temperature of the wort at the start of cooling is 20–30 °C lower than that of wort immediately after boiling and consequently, the amount of plant and cooling medium required for cooling is reduced. These considerations are of particular relevance to small-scale installations, for example those associated with individual retail outlets, where the cost of brewing plant per unit of production capacity is high and where space available for the installation is often limited.

The brewing process in accordance with the present invention can be automated easily because the degree of evaporation may be gauged by monitoring the difference in temperature of the wort immediately before and after the contact with air. This difference can be made to control the flow rate through the system so that a steady temperature difference, corresponding to the desired extent of evaporation, is achieved.

Beers prepared from worts treated in accordance with this invention may develop protein hazes earlier than those prepared from worts which have been boiled. In general this does not matter if the resulting beer is to be used reasonably quickly which is typically the case with a small-scale installation associated with a retail outlet. However, this disadvantage may be avoided by treating the wort or beer to remove the haze precursors. For example the beer may be treated with proteolytic enzymes or a selective adsorbant such as Kieselguhr or a silica gel such as silica xerogel or hydrogel. The selectively adsorbing agent may be added to the crushed malted barley and mashed with it or it may be contacted with the wort after the spent malt has been removed. The selectively adsorbing agent and the adsorbed material may settle and the wort may be decanted off the settled residue, these processes preferably being assisted by centrifuging. When the selectively adsorbing agent is added to the mash the separation stage in which the spent malt is removed from the wort may also serve to separate the selectively adsorbing agent and the adsorbed material from the aqueous solution.

Another way of bringing the selectively adsorbing agent into contact with the aqueous solution is to pass the wort through the selectively adsorbing agent. In this case, the coagulable material is adsorbed from the solution onto the surface of the selectively adsorbing agent as the solution is passed through a column packed with or a filter coated with the selectively adsorbing agent. This passage of the solution through a column or filter not only brings the wort into intimate contact with the selectively adsorbing agent but also separates the selectively adsorbing agent and adsorbed materials from the wort.

It is especially preferred that some selectively adsorbing agent is added to the wort and that this mixture is then filtered through a filter precoated with the selectively adsorbing agent.

A silica hydrogel sold under the Trade Name of Lucilite is especially preferred and in this case the amount added to the wort may be in a range from 0.6 to 8.3 kg/m³. It is preferred that the least quantity of selectively adsorbing agent is added and very satisfactory results have been obtained with amounts of silica hydrogen in a range from 1 to 2 kilograms for each cubic metre of wort. The selectively adsorbing agent preferably has a pore diameter in a range from 3 to 12 nm (30 to 120 Å) and preferably has a surface area in a range from 200 to 1200 m²/g.

This treatment with a selectively adsorbing agent removes a large portion of the potential trub and haze forming proteins without unduly affecting the head properties of the resulting beer. Preferably the contact between the wort and the selectively adsorbing agent takes place immediately after the hot wort is separated from the mash and prior to the heat stabilisation and evaporation stages.

Particular examples of methods in accordance with this invention will now be described and contrasted with conventional methods with reference to the accompanying drawings; in which: —

Figure 1 is a graph illustrating the progress of evaporation; and,

Figure 2 is a spider diagram comparing the flavour profile of a beer made in accordance with this invention with a conventional beer.

Example 1

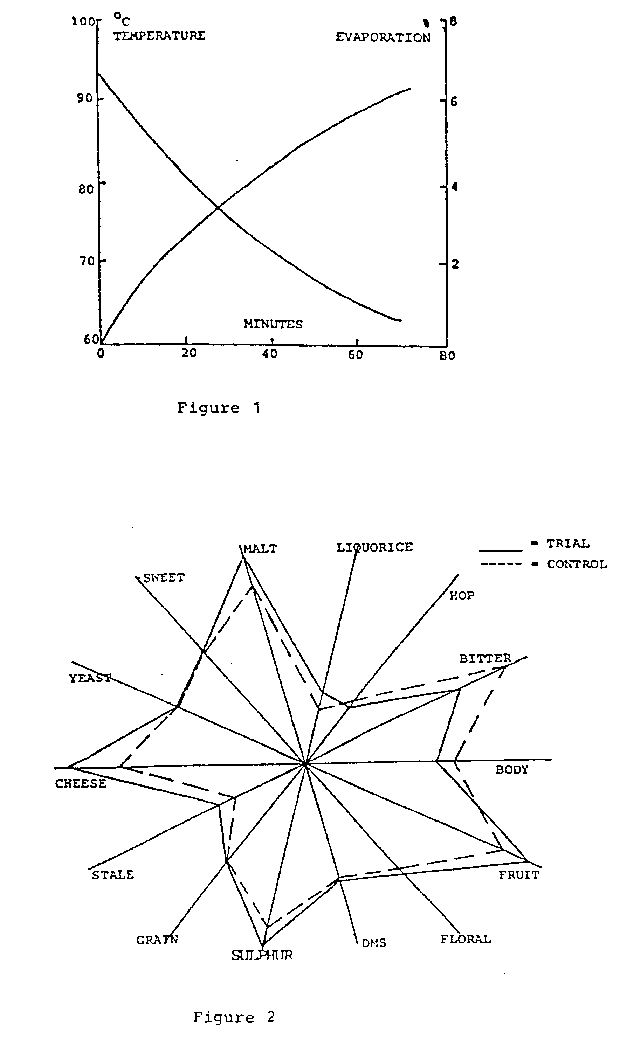

In the first example of a process in accordance with this invention a pilot scale trial was carried out using 15 Hl of hot wort produced by mashing 222 kg of Pale Ale malt with 15 Hl water at 64 °C for 75 minutes. The mash was separated in a Strainmaster (Registered Trade Mark) to separate the resulting wort from the spent malt. The strained wort was collected in a stainless steel vessel normally used for boiling. The wort was heated in this vessel to 90 °C and held at this temperature for 10 minutes to stabilise it. The wort was then recirculated through two spray balls in the roof of the vessel which had a fan assisted air outlet. Evaporation of the wort caused the wort to cool. Cooling was allowed to proceed. After a total of 75 minutes an evaporation of 6 % was achieved. Figure 1 illustrates the progress of the evaporation and illustrates the relationship between the degree of evaporation and the final temperature.

The wort was then cooled to 18 °C and collected in a fermenting vessel. The wort was pitched with yeast and then the fermentation completed in a conventional way using no haze treatment. Bitterness was provided by adding a commercial isomerised alpha acid extract of hops (Pauls's «Isohopcon», 20 %) to the rough beer to provide 25 mg/l of iso alpha acid. The beer was then stored for 4 days at 0 °C, then filtered and bottled. The resulting beer was found to be satisfactory with regard to flavour and foaming properties. Table I compares the properties of the beer produced in example 1 with a reference beer produced conventionally with a boiling step.

Table 1

|  | Experimental beer | Reference beer |
|---|---|---|
| Trub % | 0 | 100 |
| HRV | 102 | 102 |
| Head quality | 26 | 23 |
| Head life | 8 | 7 |
| Cling quality | 78 | 69 |
| Tannins | >470 | 22 |
| Proteins | 200 | 222 |
| Chapon test | >470 | >470 |
| 4-day forcing haze | 6.2 | 5.6 |

In the second example of a process in accordance with this invention a pilot scale trial was carried out using 15 Hl of hot wort produced by mashing 155 Kg of Pale Ale malt and 20 Kg of torrefied wheat with 15 Hl water at 64 °C for 75 minutes. The mash was heated to 75 °C and separated in a Strainmaster (Registered Trade Mark) to separate the resulting wort from the spent malt. The strained wort, while still hot was then filtered through a filter coated with Lucilite in an amount of 2.0 Kg/m³. The filtered wort was then heated to 93 °C and held at this temperature for 10 minutes to stabilise it. The wort was then recirculated through two spray balls in the roof of a containing vessel having a fan assisted air outlet. Evaporation of 6 % of the wort was achieved in seventy minutes and, during this time the wort cooled from 93 °C to 63 °C. The progress of this evaporation was identical to that shown in Figure 1.

150 gms of a commercial isomerised alpha acid extract of hop (Paul's «Isohopcon», 20 %) was then added to the wort and it was cooled to a temperature of 17 °C. The wort was pitched with yeast and then the fermentation completed in a conventional way using no further haze treatment.

Figure 2 is a spider diagram of the flavour profile of the beer produced in the second example, solid line, and contrasts this with that of a reference beer produced with conventional wort boiling, dotted line. Table 2 lists the properties of the resulting beer and contrasts these with the properties of the reference beer.

Table 2

|  | Experimental beer | Reference beer |
|---|---|---|
| Trub % | 0 | 100 |
| HRV | 81 | 102 |
| Head quality | 14 | 23 |
| Head life | 10 | 7 |
| Cling quality | 19 | 69 |
| Tannins | 28 | 22 |
| Proteins | 121 | 222 |
| Chapon test | 233 | >470 |
| 4-day forcing haze | 3.8 | 5.6 |

As illustrated in Figure 2 and Table 2 the resulting beer was satisfactory with regard to flavour and stability and had a better haze stability than beer produced by conventional processes.

## Claims

1. A method of brewing beer in which crushed malted barley is mashed with hot water to produce a sweet wort and then the wort is separated from the spent malt, characterised in that conventional step of wort boiling is replaced by the the wort being caused to flow as a thin film or spray against a counter-current of air to remove the unwanted volatile components of the wort by evaporation, and in the subsequent addition of hop bittering principles and flavour compounds in a soluble form.

2. A method according to claim 1, which includes a stabilisation step in which the wort is held at a high temperature below its boiling point for a period of time before it is caused to flow as a thin film or spray.

3. A method according to claim 2, in which during the stabilisation step the wort is held at a temperature in a range from 90°C to 95°C for substantially ten minutes.

4. A method according to any one of the preceding claims, in which microbial contaminants are removed from the air before it is brought into contact with the wort.

5. A method according to any one of the preceding claims, in which an evaporation of substantially 6% of the wort takes place during evaporation.

6. A method according to any one of the preceding claims, in which the wort is treated with a selectively adsorbing agent which adsorbs proteins and other haze precursors, the wort subsequently being separated from the selectively adsorbing agent and the adsorbed proteins and other haze precursors.

7. A method according to claim 6, in which the wort is treated by passage through a column packed with or a filter coated with silica hydrogel.

8. A method according to claim 7, in which silica hydrogel is added to the wort before the wort is passed through silica hydrogel.

9. A method according to claim 7 or 8, in which 1 to 2 kilograms of the silica hydrogel is contacted with each cubic metre of the wort.

10. A method according to any one of claims 6 to 9, in which the selectively adsorbing agent has a pore diameter in a range from 3 to 12 nm (30 to 120 Å) and has a surface area in a range from 200 to 1200 m²/g.

## Patentansprüche

1. Verfahren zum Bierbrauen, bei dem zerstoßene, mit Malz versetzte Gerste mit heißem Wasser gemaischt wird, um eine süße Würze herzustellen, welche danach von dem verbrauchten Malz getrennt wird, dadurch gekennzeichnet, daß die übliche Stufe des Kochens der Würze dadurch ersetzt wird, daß die Würze als dünner Film oder Spray gegen einen Luftgegenstrom fließt, um die unerwünschten flüchtigen Bestandteile der Würze durch Verdampfen zu entfernen, und daß anschließend Hopfenbitter- und Geschmacksstoffe in löslicher Form hinzugefügt werden.

2. Verfahren nach Anspruch 1, dadurch gekennzeichnet, daß es eine Stabilisationsstufe umfaßt, in der die Würze bei einer hohen Temperatur unter ihrem Kochpunkt für eine Zeitspanne gehalten wird, bevor sie als dünner Film oder Sprühnebel fließt.

3. Verfahren nach Anspruch 2, dadurch gekennzeichnet, daß während der Stabilisationsstufe die Würze bei einer Temperatur im Bereich von 90°C bis 95°C für etwa 10 Minuten gehalten wird.

4. Verfahren nach irgendeinem der vorstehenden Ansprüche, dadurch gekennzeichnet, daß mikrobielle Verunreinigungen aus der Luft entfernt werden, bevor sie mit der Würze in Kontakt gebracht wird.

5. Verfahren nach irgendeinem der vorstehenden Ansprüche, dadurch gekennzeichnet, daß eine Verdampfung von etwa 6% der Würze während des Verdampfens stattfindet.

6. Verfahren nach irgendeinem der vorstehenden Ansprüche, dadurch gekennzeichnet, daß die Würze mit einem ausgewählten Adsorptionsreagenz behandelt wird, das Proteine und andere Trübungsvorläufer adsorbiert, und daß die Würze anschließend von dem selektiven Adsorptionsreagenz und den adsorbierten Proteinen und den anderen Trübungsvorläufern getrennt wird.

7. Verfahren nach Anspruch 6, dadurch gekennzeichnet, daß die Würze behandelt wird, indem sie eine Säule durchläuft, welche gepackt ist oder mit einem Silika-Hydrogel-Filter überzogen ist.

8. Verfahren nach Anspruch 7, dadurch gekennzeichnet, daß das Silika-Hydrogel zur Würze hinzugefügt wird, bevor die Würze das Silika-Hydrogel durchläuft.

9. Verfahren nach Anspruch 7 oder 8, dadurch gekennzeichnet, daß 1 bis 2 kg Silika-Hydrogel mit jedem Kubikmeter der Würze in Berührung gebracht werden.

10. Verfahren nach irgendeinem der Ansprüche 6 bis 9, dadurch gekennzeichnet, daß das selektiv adsorbierende Reagenz einen Porendurchmesser im Bereich von 3 bis 12 nm (30 bis 120 A) und einen Oberflächenbereich im Bereich von 200 bis 1200 m²/g besitzt.

## Revendications

1. Procédé de brassage de la bière, dans lequel de l'orge maltée écrasée est mise à macérer avec de l'eau chaude pour produire un moût sucré, puis le moût est séparé du malt épuisé, caractérisé en ce que l'étape classique d'ébullition du moût est remplacée par une opération dans laquelle est crée un courant de moût en film mince ou en pulvérisation à contre-courant avec de l'air pour éliminer les composants volatils non désirés du moût par évaporation, et par l'addition ultérieure de principes amers et de composés conférant la flaveur sous une forme soluble.

2. Procédé suivant la revendication 1, qui comprend une étape de stabilisation dans laquelle le moût est maintenu à une haute température au-dessous de son point d'ébullition pendant une période qui précède son écoulement en mince film ou en pulvérisation.

3. Procédé suivant la revendication 2, dans lequel, pendant l'étape de stabilisation, le moût est maintenu à une température dans un intervalle de 90 à 95 °C pendant pratiquement 10 minutes.

4. Procédé suivant l'une quelconque des revendications précédentes, dans lequel des impuretés microbiennes sont éliminées de l'air avant la mise en contact de ce dernier avec le moût.

5. Procédé suivant l'une quelconque des revendications précédentes, dans lequel une évaporation de, pratiquement, 6 % du moût a lieu pendant l'évaporation.

6. Procédé suivant l'une quelconque des revendications précédentes, dans lequel le moût est traité avec un adsorbant sélectif qui adsorbe des protéines et d'autres précurseurs de voile, le moût étant ensuite séparé de l'adsorbant sélectif et des protéines et autres précurseurs de voile adsorbés.

7. Procédé suivant la revendication 6, dans lequel le moût est traité par passage sur une colonne garnie d'hydrogel de silice ou sur un filtre revêtu d'hydrogel de silice.

8. Procédé suivant la revendication 7, dans lequel de l'hydrogel de silice est ajouté au moût avant le passage de ce dernier à travers de l'hydrogel de silice.

9. Procédé suivant la revendication 7 ou 8, dans lequel on fait entrer en contact avec chaque mètre cube de moût 1 à 2 kilogrammes d'hydrogel de silice.

10. Procédé suivant l'une quelconque des revendications 6 à 9, dans lequel l'adsorbant sélectif a un diamètre de pores compris dans l'intervalle de 3 à 12 nm (30 à 120 Å) et a une surface spécifique comprise dans un intervalle de 200 à 1200 m$^2$/g.

Figure 1

Figure 2